# FASCICULE DE BREVET EUROPEEN

(11) **EP 3 525 364 B1**
(45) Date de publication et mention de la délivrance du brevet: **11.11.2020**
(21) Numéro de dépôt: 19153136.7
(22) Date de dépôt: 22.01.2019
(51) Int. Cl.: H04B 7/185, F01N 3/01

(54) **STATION PLACEE SUR UNE PLATEFORME A HAUTE ALTITUDE ET SYSTEME DE TELECOMMUNICATIONS COMPRENANT AU MOINS UNE TELLE STATION**
FUNKSTATION AUF EINER PLATTFORM IN GROSSER HÖHE, UND TELEKOMMUNIKATIONSSYSTEM, DAS MINDESTENS EINE SOLCHE FUNKSTATION UMFASST
STATION PLACED ON A HIGH-ALTITUDE PLATFORM AND TELECOMMUNICATION SYSTEM COMPRISING AT LEAST ONE SUCH STATION

(30) Priorité: 01.02.2018 FR 1800104
(43) Date de publication de la demande: 14.08.2019
(73) Titulaire: Thales, 92400 Courbevoie (FR)
(72) Inventeur: GAYRARD, Jean-Didier, 31037 TOULOUSE Cedex 1 (FR); LE ROUX, Per-Yann, 31037 TOULOUSE Cedex 1 (FR)
(74) Mandataire: Marks & Clerk France

(56) Documents cités:
- WO-A1-01/59961
- US-A1- 2015 215 039
- US-A1- 2015 295 638
- US-A1- 2015 304 885
- AVDIKOS G ET AL: "Overview of the application of High Altitude Platform (HAP) systems in future telecommunication networks", 2008 10TH INTERNATIONAL WORKSHOP ON SIGNAL PROCESSING FOR SPACE COMMUNICATIONS (SPSC); 6-8 OCTOBER 2008; RHODES ISLAND, GREECE, IEEE, PISCATAWAY, NJ, USA, 6 octobre 2008 (2008-10-06), pages 1-6, XP031365907, ISBN: 978-1-4244-2572-3

## Description

Le domaine de l'invention est celui des liaisons à haut débit et à faible latence pour faire communiquer deux stations terminales distantes situées en deux points de la Terre. Par exemple, l'invention s'applique pour l'établissement de liaison bidirectionnelle point à point à faible latence entre deux places financières du globe. Dans le domaine des échanges entre places financières ou boursières, la latence des communications est un paramètre important. L'invention s'applique également au domaine de la surveillance d'aéronefs ou la surveillance maritime.

L'invention concerne plus précisément un système de télécommunications comprenant plusieurs stations placées sur des plateformes à haute altitude stationnaires complémentées par des répéteurs placés dans des stations relais situées au sol ou en mer.

Un objectif visé par l'invention est de concevoir une liaison de communication numérique à faible latence entre deux stations terminales distantes situées en deux points distants du globe terrestre, séparés, par exemple, par un continent ou par un océan.

Une solution connue permettant de réaliser une telle liaison de communication point à point consiste à déployer des fibres optiques. Cependant, cette technologie ne permet pas d'atteindre les latences faibles requises notamment pour les applications dans le domaine financier.

Pour cette raison, une autre solution connue consiste à utiliser des stations placées sur des plateformes à haute altitude ou HAPS en anglais (High Altitude Platform Station) qui sont reliées en série pour établir une liaison entre deux points du globe.

On connait notamment la solution décrite dans le brevet américain US 9602190 qui divulgue une liaison entre deux stations terminales, composée de plusieurs plateformes à haute altitude en série. Les plateformes communiquent entre elles par des liaisons radiofréquences. Des satellites peuvent aussi remplacer certaines plateformes.

Un inconvénient de cette première solution est que les liaisons radiofréquences ne peuvent s'établir qu'entre deux stations en visibilité directe l'une de l'autre. Une liaison longue distance nécessite donc un grand nombre de stations relais placées sur des plateformes à haute altitude, ce qui présente un coût d'installation et de maintenance important.

Par ailleurs, les liaisons radiofréquences peuvent être perturbées ou atténuées en cas de mauvaises conditions météo, notamment lors d'évènements de pluie. Les atténuations provoquées par la vapeur d'eau atmosphérique et les précipitations sont particulièrement fortes aux fréquences supérieures à 30 GHz (fréquences dans la bande EHF). Pour s'affranchir des atténuations dues à la pluie, le point le plus bas d'une liaison radiofréquence doit être au-dessus de l'altitude de l'isotherme zéro degrés Celsius (ou de l'altitude du haut de la pluie). L'isotherme 0° s'élève aux environs de 5 km d'altitude dans les régions intertropicales, réduisant ainsi la distance de visibilité opérationnelle « radio » entre deux stations placées sur une plateforme à haute altitude à moins de 875 km.

On connait également la solution décrite dans le brevet américain US 9215008 qui divulgue un système similaire basé sur des plateformes non stationnaires et des liaisons laser entre chaque station. Les liaisons laser présentent l'inconvénient d'être sensibles aux perturbations liées aux nuages qui peuvent bloquer une transmission de la lumière infra rouge du laser. Ainsi, l'utilisation de liaisons laser présente l'inconvénient d'une portée réduite et nécessite donc un grand nombre de plateformes afin de minimiser la distance entre deux plateformes pour avoir une distance de visibilité acceptable. Certains nuages s'élèvent au-delà de 12 km d'altitude, réduisant ainsi la distance de visibilité d'une liaison laser entre deux stations placées sur une plateforme à haute altitude à moins de 640 km.

L'invention résout les limitations des solutions de l'art antérieur précitées par la mise en œuvre d'une liaison de communication numérique à faible latence composée de stations placées sur des plateformes à haute altitude et de répéteurs placés dans des stations relais disposées au sol ou en mer à égale distance de deux plateformes successives. Chaque station placée sur une plateforme à haute altitude est configurée pour sélectivement activer une liaison directe avec une plateforme voisine ou une liaison de secours avec un répéteur placé dans une station relais lorsque les conditions météo ne permettent pas d'utiliser la liaison directe.

L'invention a ainsi pour objet une station placée sur une plateforme à haute altitude stationnaire comprenant deux ensembles émetteur/récepteur principaux chacun configuré pour établir une liaison de communication principale avec une station terminale distante distincte ou avec une autre station placée sur une plateforme à haute altitude stationnaire distincte et deux ensembles émetteur/récepteur de secours, chacun configuré pour établir une liaison de communication de secours avec un répéteur placé sur une station relais distincte au sol ou en mer ou avec une station terminale distante, distincte a station comprenant en outre un organe de contrôle configuré pour sélectivement activer une liaison de communication principale ou une liaison de communication de secours en fonction d'un indicateur de l'état de fonctionnement de la liaison de communication principale.

Selon un aspect particulier de l'invention, l'organe de contrôle comprend un dispositif de mesure d'un indicateur de l'état de fonctionnement de la liaison de communication principale et la station comprend un dispositif de sélection configuré pour activer une liaison de communication de secours lorsque l'état de fonctionnement d'une liaison de communication principale est dégradé.

Selon un aspect particulier de l'invention, l'indicateur de l'état de fonctionnement de la liaison de communication principale dépend des conditions météorologiques.

Selon un aspect particulier de l'invention, la liaison de communication principale est une liaison optique.

Selon un aspect particulier de l'invention, la liaison de communication de secours est une liaison radiofréquence.

Selon un mode de réalisation particulier, la station placée sur une plateforme à haute altitude stationnaire selon l'invention comprend au moins un ensemble émetteur/récepteur configuré pour établir une troisième liaison de communication avec un aéronef ou un navire.

L'invention a aussi pour objet un système de télécommunications entre une première station terminale et une seconde station terminale distantes, comprenant au moins deux stations placées sur des plateformes à haute altitude stationnaires selon l'une des revendications précédentes et au moins un répéteur placé sur une station relais au sol ou en mer et configuré pour relayer les communications entre deux stations placées sur des plateformes à haute altitude stationnaires.

Selon un aspect particulier de l'invention, la distance entre deux plateformes à haute altitude stationnaires est déterminée à partir de deux angles d'élévation respectifs prédéterminés entre la station relais et les deux plateformes respectives, les angles d'élévation étant prédéterminés en fonction de l'environnement géographique du répéteur.

D'autres caractéristiques et avantages de la présente invention apparaîtront mieux à la lecture de la description qui suit en relation aux dessins annexés qui représentent :

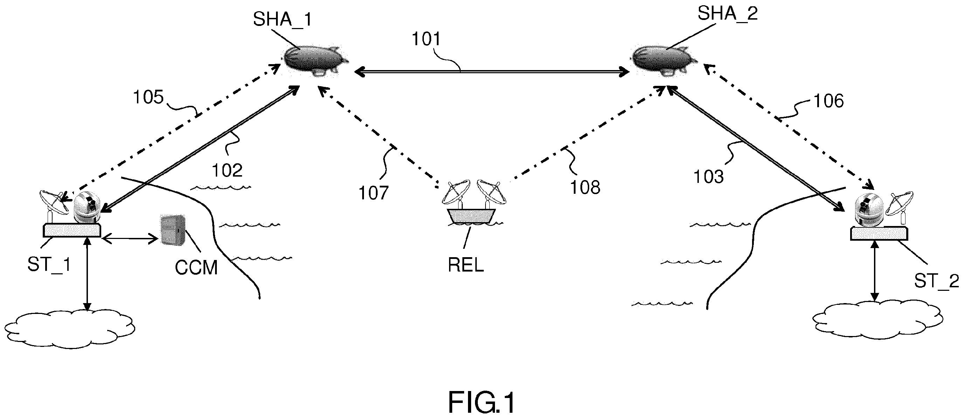

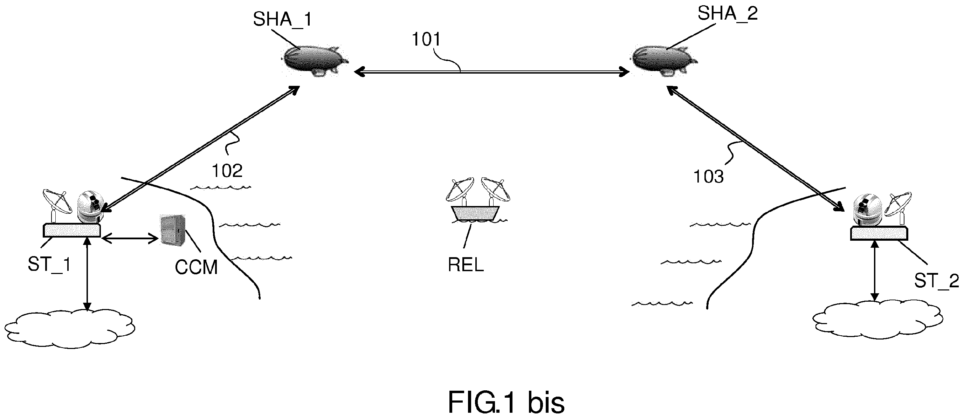

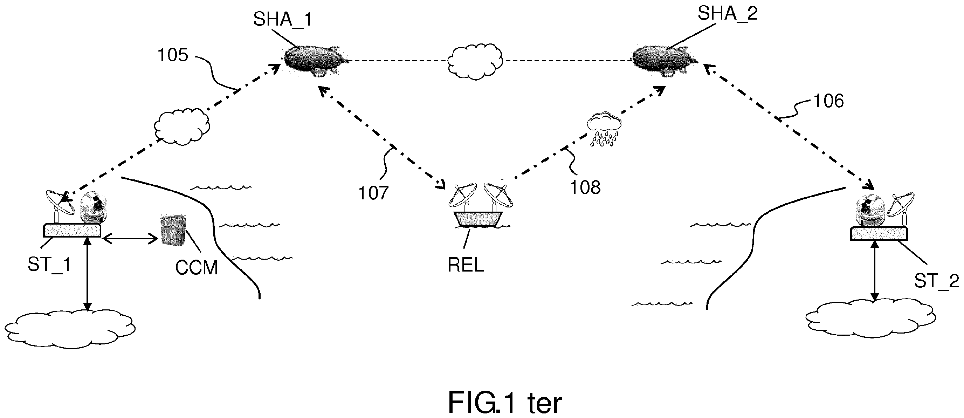

- La figure 1, un schéma d'un exemple de système de télécommunication selon un premier mode de réalisation de l'invention,
- Les figures 1bis et 1ter, deux autres schémas du système de la figure 1 dans deux configurations de fonctionnement différentes,
- La figure 2, une illustration d'une liaison de communication entre deux points de la Terre réalisée à l'aide d'un système selon le premier mode de réalisation de l'invention,
- La figure 3, un premier schéma d'un exemple de système de télécommunication selon un second mode de réalisation de l'invention,
- La figure 4, un second schéma d'un exemple de système de télécommunication selon le second mode de réalisation de l'invention,
- La figure 5, un schéma illustrant le positionnement d'une station relais vis-à-vis de deux plateformes à haute altitude,
- La figure 6, un diagramme donnant la distance entre deux plateformes à haute altitude en fonction de l'angle d'élévation vu de la station relais,
- La figure 7, un synoptique d'une station placée sur une plateforme à haute altitude selon le premier mode de réalisation de l'invention,

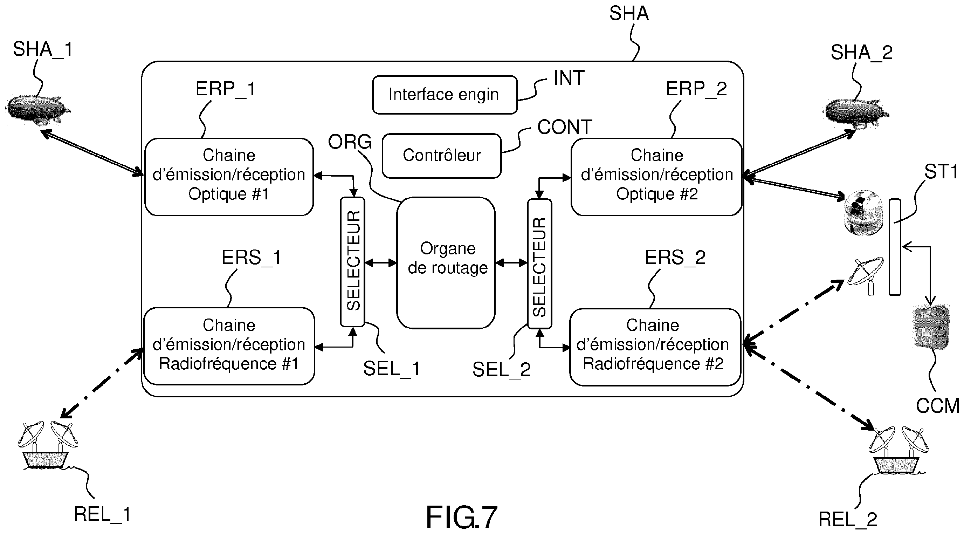

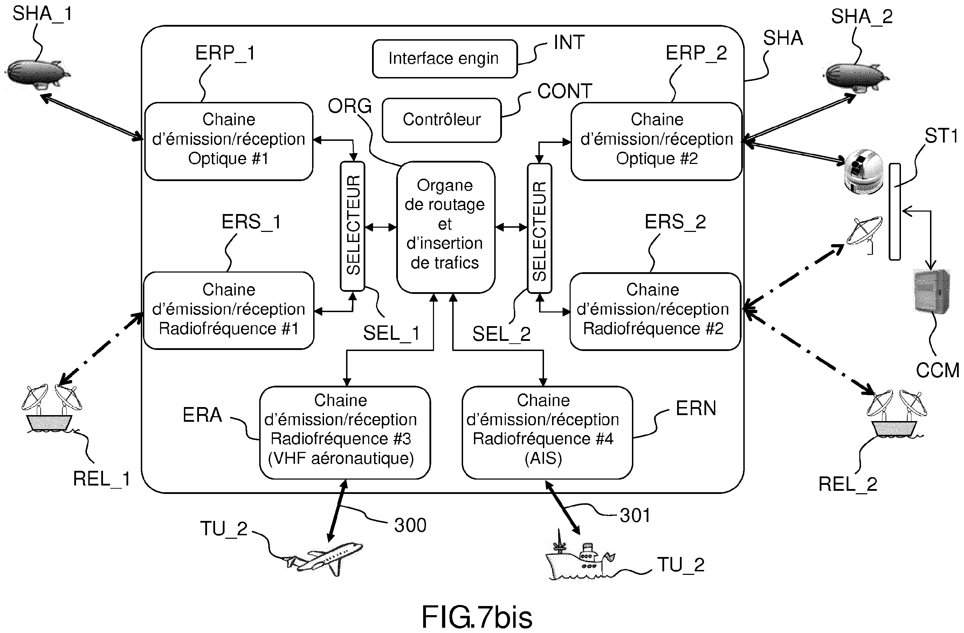

- La figure 7bis, un synoptique d'une station placée sur une plateforme à haute altitude selon le second mode de réalisation de l'invention,

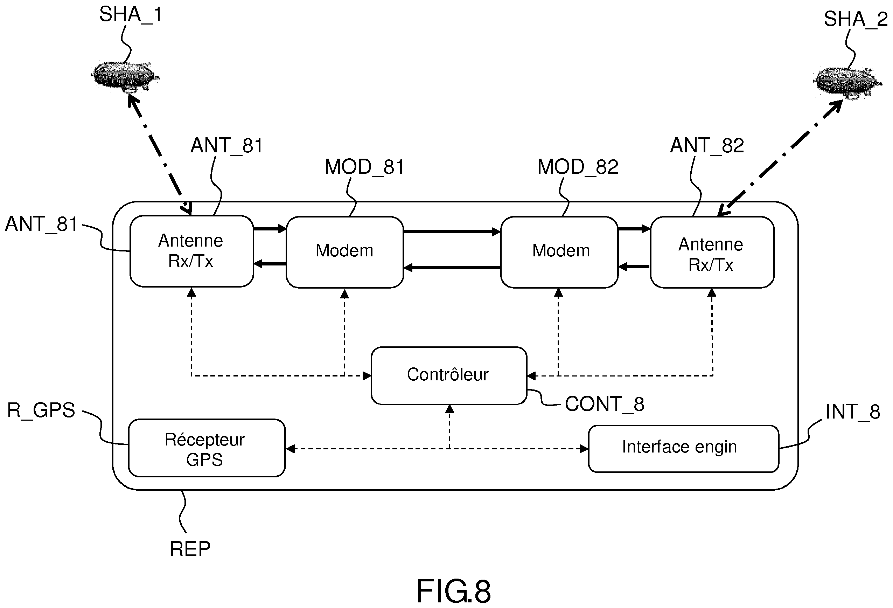

- La figure 8, un synoptique d'une station relais et de son répéteur,

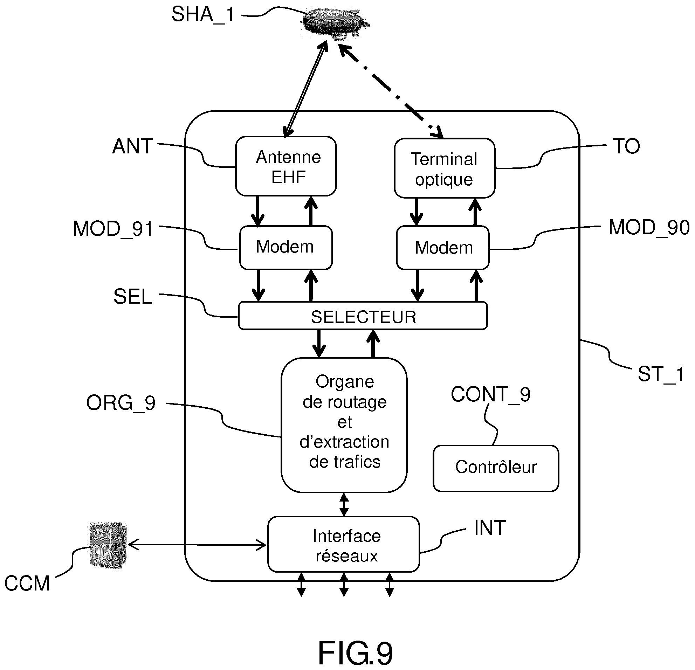

- La figure 9, un synoptique d'une station terminale.

La figure 1 représente un schéma d'un système de télécommunication selon un premier mode de réalisation de l'invention. Ce système comprend plusieurs stations placées sur des plateformes à haute altitude stationnaires SHA_1,SHA_2 et agencées en série pour former ensemble une liaison de communication point à point entre une première station terminale et une seconde station terminale ST_1 ,ST_2.

Le terme « station » ou « station de communication» désigne une station comprenant un ou plusieurs émetteurs ou récepteurs, ou un ensemble d'émetteurs et de récepteurs, y compris les appareils accessoires, nécessaires pour assurer un service de communication en un emplacement donné.

Le terme « station relais » désigne une station comprenant un ou plusieurs répéteurs relayant dans les deux sens de communication les signaux issus d'autres stations de communication.

Une station placée sur une plate-forme à haute altitude (HAPS en anglais pour High Altitude Platform Station) désigne une station installée sur un objet placé à une altitude élevée, par exemple au dessus de 18 km et en un point spécifié, nominal, fixe par rapport à la Terre.

Une plateforme à haute altitude stationnaire SHA_1,SHA_2 est, par exemple, un aérostat. Elle est pourvue de moyens de propulsion, typiquement un moteur, lui permettant de compenser la force des vents pour rester stationnaire autour d'un point spécifié, nominal, fixe par rapport à la Terre. Par stationnaire, on entend ici un positionnement de la plateforme fixe par rapport à un point situé au sol ou, plus généralement, un déplacement de la plateforme limité à une zone restreinte, de quelques kms de diamètre, centrée sur un point fixe.

Bien que deux plateformes SHA_1,SHA_2 sont représentées sur la figure 1, un système de télécommunications réel comporte en général plus de deux plateformes pour pouvoir construire une liaison de communication entre deux points du globe distants de plusieurs milliers de km.

Le système selon le premier mode de réalisation de l'invention comporte en outre au moins un répéteur placé dans une station relais REL disposée entre deux plateformes SHA_1,SHA_2 voisines. La station relais REL est disposée au sol ou en mer. Lorsqu'elle est positionnée sur la Terre, une station relais REL est, par exemple, disposée sur un pylône ou sur un point élevé. Lorsqu'elle est positionnée en mer, une station relais REL est disposée sur un engin flottant, par exemple une bouée. L'engin flottant sur lequel est disposée la station relais comprend des moyens pour rester stationnaire autour d'un point fixe et spécifié. Ces moyens peuvent être par exemple des moteurs à hélices ou une ancre permanente.

Chaque station placée sur une plateforme à haute altitude stationnaire SHA_1,SHA_2 comprend des moyens pour établir une liaison bidirectionnelle principale avec une autre station placée sur une plateforme voisine ou avec une station terminale. Cette liaison 101,102,103 est, par exemple, une liaison laser ou optique en espace libre.

Chaque station placée sur une plateforme à haute altitude stationnaire SHA_1,SHA_2 comprend également des moyens pour établir une liaison bidirectionnelle 107,108 de secours avec un répéteur placé dans un relais REL. La liaison de secours 107,108 est une liaison radiofréquence, par exemple dans la bande de fréquences EHF.

Par ailleurs, chaque station placée sur une plateforme à haute altitude stationnaire SHA_1,SHA_2 est aussi configurée pour établir une liaison bidirectionnelle 105,106 de secours avec une station terminale ST_1,ST_2, la liaison de secours étant une liaison radiofréquence de même nature que la liaison de secours entre une station SHA_1 ,SHA_2 et un répéteur placé dans une station relais REL.

Au moins une station terminale ST_1 est reliée à un centre de contrôle et commande CCM configuré pour paramétrer le système de télécommunications selon l'invention.

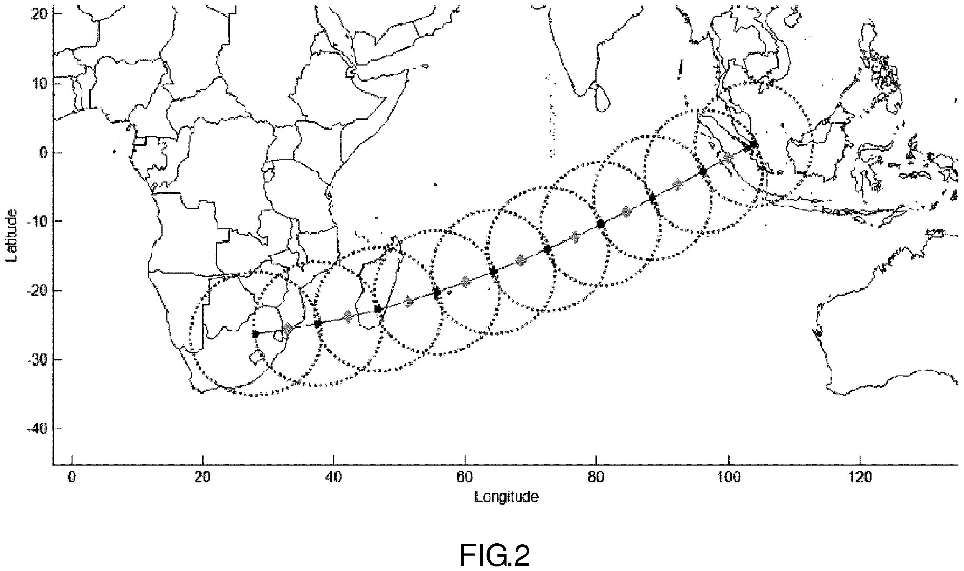

En agençant plusieurs stations placées sur des plateformes à haute altitude stationnaires et plusieurs stations relais en série, on arrive à réaliser une liaison de communication point à point transcontinentale ou transocéanique. La figure 2 schématise un exemple de liaison de communication réalisée entre Johannesburg et Singapour en utilisant 10 plateformes à haute altitude et 9 relais en mer.

Comme indiqué en préambule, les liaisons optiques 101,102,103 entre deux plateformes peuvent être bloquées ou atténuées par les phénomènes météorologiques, notamment les nuages. Pour résoudre ce problème, chaque station placée sur une plateforme à haute altitude stationnaire SHA_1,SHA_2 comprend un organe de contrôle configuré pour sélectivement activer la liaison principale 101 entre deux stations placées sur des plateformes à haute altitude ou une liaison de secours 107,108 avec une station relais REL placée au sol ou en mer. Dans le cas où la liaison de secours est activée, le répéteur placé dans la station relais REL retransmet la liaison reçue d'une première station SHA_1 vers une seconde station SHA_2 voisine.

De même, la liaison de secours 105,106 entre une station SHA_1,SHA_2 et une station terminale ST_1,ST_2 est activée si la liaison principale 102,103 est défaillante.

La figure 1bis représente le système de la figure 1 dans le cas où les liaisons principales 101,102,103 optiques sont en état de fonctionner.

La figure 1ter représente le même système dans le cas où ces liaisons principales 101,102,103 sont bloquées par des nuages et où les liaisons de secours 105,107,108,106 sont activées. Bien que sur la figure 1ter, toutes les liaisons de secours sont activées, l'invention ne se limite pas à ce cas de figure et couvre aussi les cas où au moins une liaison de secours est activée au sein du système global alors que d'autres liaisons principales sont maintenues.

La sélection de la liaison principale ou de la liaison de secours est effectuée à partir d'un indicateur de l'état de fonctionnement de la liaison principale. Cet indicateur peut être obtenu de plusieurs manières. Il peut être le résultat d'une mesure de qualité du lien de communication 101,104 principal, par exemple une mesure réalisée à bord de la station SHA_1,SHA_2, soit du rapport signal à bruit, soit de la puissance optique du signal reçu. Cet indicateur peut être aussi obtenu par un dispositif de détection des nuages basé sur un appareil photographique et un logiciel de traitement des images apte à détecter des nuages entre les plateformes. Il peut aussi être déterminé a priori en fonction de données météorologiques et transmis par un centre de contrôle et commande CCM vers chaque station SHA_1 ,SHA_2.

L'utilisation de relais REL permet d'augmenter la distance entre deux plateformes à haute altitude stationnaires et au final de diminuer leur nombre afin de réduire le coût de réalisation et de déploiement global du système.

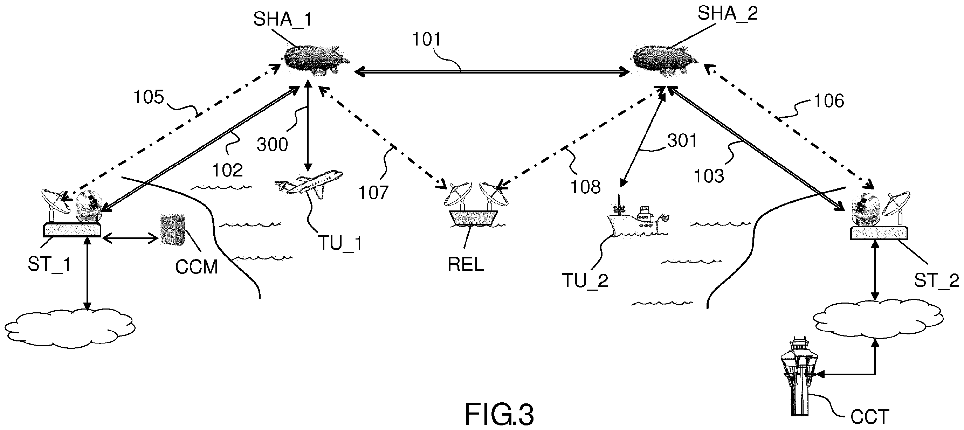

La figure 3 représente un second mode de réalisation du système selon l'invention.

Dans ce second mode de réalisation, le système est utilisé en outre pour fournir une liaison de contribution ou liaison « back-haul » en anglais à un système de surveillance d'aéronefs ou un système de surveillance maritime.

Pour cela, chaque station SHA_1,SHA_2 placée sur des plateformes haute altitude est en outre pourvue de moyens pour établir une liaison de communication 300,301 avec un aéronef TU_1 ou un bateau TU_2, par exemple une liaison radiofréquence dans la bande de fréquences VHF.

Un système de surveillance d'aéronefs est, par exemple, un système du type « ADS-B » pour « Automatic Dependent Surveillance Broadcast ». Dans un tel système, les aéronefs émettent périodiquement des messages pour signaler leur position. Ces messages sont captés par une station SHA_1,SHA_2 par l'intermédiaire de la liaison de communication 300 radiofréquence. Ils sont ensuite transmis à une station terminale ST_1,ST_2 qui est reliée à un centre de contrôle de la circulation aérienne CTT par le réseau Internet ou tout autre moyen de communication.

Le même fonctionnement peut être mis en œuvre pour la surveillance maritime pour un système de type « AIS » pour « Automatic Identification System » dans lequel des navires TU_2 émettent des messages d'identification comprenant un identifiant, leur position et leur route. Ces messages sont captés par une station SHA_1 ,SHA_2 proche du navire via la liaison de communication radiofréquence 301.

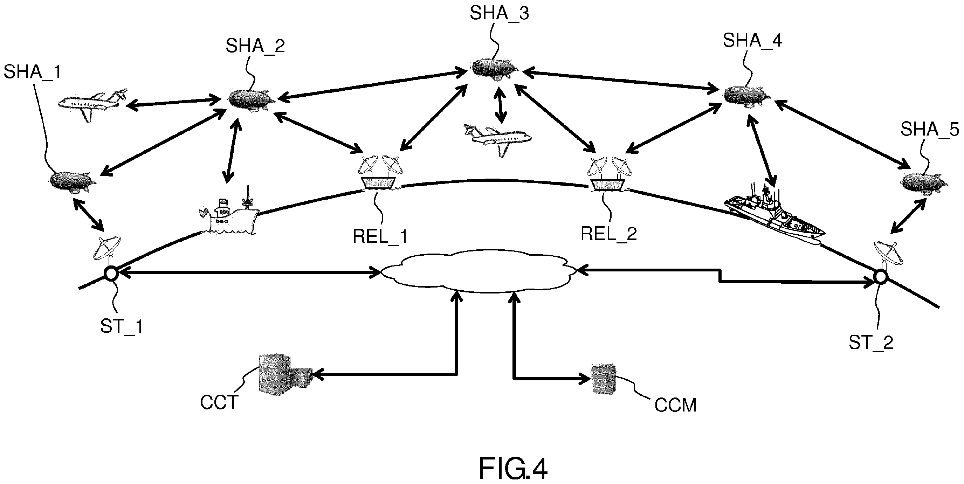

La figure 4 schématise un autre exemple de système de communication combinant l'un et l'autre des modes de réalisation de l'invention, comprenant, à titre illustratif et non limitatif, cinq stations placées sur des plateformes à haute altitude SHA_1 ,SHA_2,SHA_3,SHA_4,SHA_5 et deux stations relais RE_1,RE_2 flottants situées en mer.

Afin d'optimiser au mieux le nombre et la répartition des stations placées sur des plateformes à haute altitude et des stations relais au sein du système de télécommunication selon l'invention, un procédé de déploiement particulier du système est proposé.

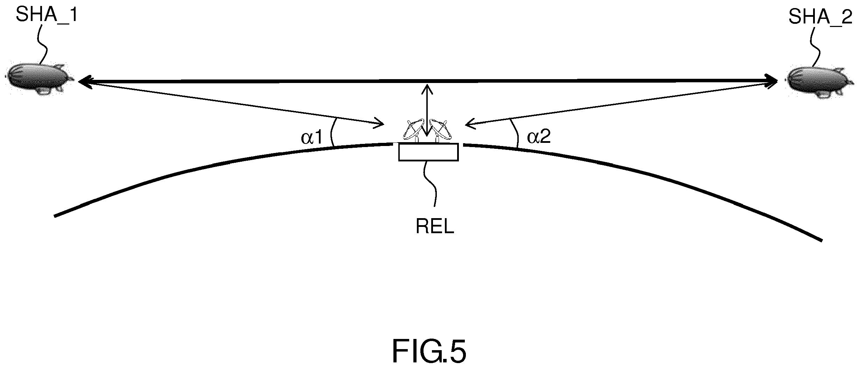

Pour chaque station relais positionnée au sol ou en mer, on fixe un angle d'élévation α associé en fonction de l'environnement géographique du relais. L'angle d'élévation est l'angle entre l'horizon et la droite reliant le relais à une plateforme à haute altitude. Cet angle d'élévation est illustré sur la figure 5. Par exemple, si des obstacles sont présents autour du relais, par exemple des montagnes, l'angle d'élévation est pris à une valeur plus élevée que si le relais est situé en mer. Pour chaque relais disposé entre deux plateformes à haute altitude, deux angles d'élévation sont définis.

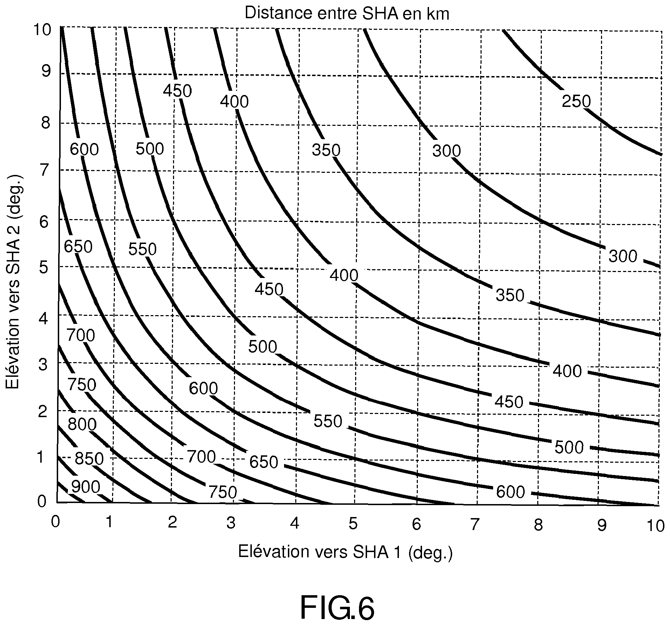

Le diagramme de la figure 6 donne ensuite la distance entre deux plateformes à haute altitude qu'il faut respecter pour obtenir les deux angles d'élévation prescrits. Ainsi, on peut déterminer la distance entre les plateformes voisines deux à deux et en déduire le nombre de plateformes et de stations relais à utiliser pour réaliser une liaison de communication ayant une longueur donnée.

La figure 7 décrit un exemple de réalisation d'une station SHA placée sur une plateforme à haute altitude selon le premier mode de réalisation de l'invention. La station SHA est configurée pour communiquer avec d'autres stations similaires SHA_1,SHA_2, une station terminale ST_1 et au moins une station relais REL_1,REL_2.

La station SHA comprend deux ensembles ERP_1,ERP_2 émetteur/récepteur configurés pour établir une liaison de communication principale optique avec une autre station SHA_1,SHA_2 placée sur une plateforme à haute altitude ou avec une station terminale ST_1. Chaque ensemble ERP_1,ERP_2 émetteur/récepteur est configuré pour établir une liaison optique en espace libre ou liaison laser. Il comprend au moins un modulateur/démodulateur et un terminal optique.

La station SHA comprend en outre deux ensembles ERS_1,ERS_2 émetteur/récepteur configurés pour établir une liaison de secours radiofréquence avec une station relais REL_1,REL_2 ou une station terminale ST_1.

Chaque ensemble ERS_1,ERS_2 émetteur/récepteur comprend au moins un modulateur/démodulateur et un transmetteur radio en bande EHF comprenant une antenne.

La station SHA comporte en outre un organe de commande ORG et au moins un sélecteur SEL_1 ,SEL_2 configurés pour activer soit la liaison de communication principale avec une station SHA_1,SHA_2 placée dans une plateforme à haute altitude ou une station terminale ST_1, soit la liaison de secours avec un répéteur placé dans un relais REL_1,REL_2 ou une station terminale ST_1.

L'organe de commande ORG est configuré pour sélectionner la liaison principale ou la liaison de secours en fonction d'un indicateur d'état de la liaison principale. Cet indicateur peut être obtenu à partir de mesures sur le signal reçu de la liaison principale, par exemple des mesures de rapport signal à bruit ou des mesures de la puissance optique du signal reçu. Il peut aussi être fourni à distance par un centre de contrôle CCM en fonction des conditions météorologiques dans l'environnement proche de la plateforme à haute altitude. Dans ce dernier cas, l'indicateur est reçu via une interface INT et un contrôleur CONT qui sont par ailleurs en charge de la configuration générale de la station SHA.

Dans le second mode de réalisation de l'invention, la station SHA comprend en outre, tel qu'illustré sur la figure 7bis, au moins un ensemble émetteur/récepteur ERA_ERN pour recevoir des messages d'identification en provenance d'aéronefs TU_1 ou de navires TU_2. Chaque ensemble émetteur/récepteur ERA_ERN comprend au moins un processeur, un modulateur/démodulateur et un récepteur radio, par exemple en bande VHF. Le processeur est configuré pour extraire les messages d'identification du signal reçu et les transmettre à l'organe de contrôle ORG qui est en charge d'insérer ces messages dans le signal émis sur la liaison de communication principale à destination finale d'une station terminale ST_1.

La figure 8 décrit un exemple d'architecture d'un répéteur REP placé dans une station relais. Le répéteur REP comprend au moins un organe de contrôle CONT_8, une interface INT_8 et un récepteur GNSS R_GPS. Il comprend en outre deux chaines d'émission/réception d'une liaison de secours radiofréquence comprenant chacune un modulateur/démodulateur MOD_81,MOD_82 et un émetteur/récepteur radio en bande EHF par exemple, ANT_81,ANT_82 comprenant une antenne. Le répéteur REP est ainsi configuré pour recevoir un signal provenant d'une première station SHA_1, le démoduler, puis le moduler à nouveau et le retransmettre vers une seconde station SHA_2, et ceci dans les deux sens de communication.

Sans sortir du cadre de l'invention, d'autres implémentations sont possibles pour le répéteur REP, notamment un répéteur non régénératif qui ne démodule pas le signal reçu et le retransmet directement sur la seconde liaison.

La figure 9 décrit un exemple de réalisation d'une station terminale ST_1 qui comprend principalement une chaine d'émission/réception principale optique et une chaine d'émission/réception de secours radiofréquence. La chaine d'émission/réception principale optique comprend un terminal optique TO et un modulateur/démodulateur MOD_90. La chaine d'émission/réception de secours radiofréquence comprend un émetteur/récepteur radio en bande EHF par exemple et un modulateur/démodulateur MOD_91.

La station ST_1 comprend en outre un organe de routage ORG_9, un contrôleur CONT_9 et une interface réseau INT_9 pour communiquer avec un centre de commande CCM.

## Revendications

1. Station, SHA, placée sur une plateforme à haute altitude stationnaire, la station SHA comprenant deux ensembles émetteur/récepteur (ERP_1,ERP_2) principaux chacun configuré pour établir une liaison de communication principale (101,102,103) avec une station terminale distante (ST_1,ST_2) distincte ou avec une autre station placée sur une plateforme à haute altitude stationnaire (SHA_1,SHA_2) distincte et deux ensembles émetteur/récepteur (ERS_1,ERS_2) de secours, chacun configuré pour établir une liaison de communication de secours (105,106,107,108) avec un répéteur (REP) placé sur une station relais (REL) distincte au sol ou en mer ou avec une station terminale distante (ST_1,ST_2) distincte, la station SHA comprenant en outre un organe de contrôle (ORG) configuré pour sélectivement activer une liaison de communication principale ou une liaison de communication de secours en fonction d'un indicateur de l'état de fonctionnement de la liaison de communication principale.

2. Station placée sur une plateforme à haute altitude stationnaire selon la revendication 1 dans laquelle l'organe de contrôle (ORG) comprend un dispositif de mesure d'un indicateur de l'état de fonctionnement de la liaison de communication principale et la station SHA comprend un dispositif de sélection (SEL_1,SEL_2) configuré pour activer une liaison de communication de secours lorsque l'état de fonctionnement d'une liaison de communication principale est dégradé.

3. Station placée sur une plateforme à haute altitude stationnaire selon la revendication 1 dans laquelle l'indicateur de l'état de fonctionnement de la liaison de communication principale dépend des conditions météorologiques.

4. Station placée sur une plateforme à haute altitude stationnaire selon l'une des revendications précédentes dans laquelle la liaison de communication principale (101,102,103) est une liaison optique.

5. Station placée sur une plateforme à haute altitude stationnaire selon l'une des revendications précédentes dans laquelle la liaison de communication (105,106,107,108) de secours est une liaison radiofréquence.

6. Station placée sur une plateforme à haute altitude stationnaire selon l'une des revendications précédentes comprenant au moins un ensemble émetteur/récepteur (ERA,ERN) configuré pour établir une troisième liaison de communication (300,301) avec un aéronef (TU_1) ou un navire (TU_2).

7. Système de télécommunications entre une première station terminale (ST_1) et une seconde station terminale (ST_2) distantes, comprenant au moins deux stations (SHA_1,SHA_2) selon l'une des revendications précédentes, placées sur des plateformes à haute altitude stationnaires, le système comprenant en outre au moins un répéteur (REP) placé sur une station relais (REL) au sol ou en mer et configuré pour relayer les communications entre deux stations (SHA_1,SHA _2) placées sur des plateformes à haute altitude stationnaires.

8. Système de télécommunications selon la revendication 7 dans lequel la distance entre deux plateformes à haute altitude stationnaires est déterminée à partir de deux angles d'élévation respectifs prédéterminés entre la station relais (REL) et les deux plateformes respectives, les angles d'élévation étant prédéterminés en fonction de l'environnement géographique du répéteur.

## Patentansprüche

1. Station, SHA, auf einer stationären Plattform in großer Höhe, wobei die Station SHA zwei Hauptsender-/Empfängereinheiten (ERP_1, ERP_2), die jeweils zum Aufbauen einer Hauptkommunikationsverbindung (101, 102, 103) mit einer separaten entfernten Endstation (ST_1, ST_2) oder mit einer anderen Station auf einer separaten stationären Plattform (SHA_1, SHA_2) in großer Höhe und zwei Hilfssender-/Empfängereinheiten (ERS_1, ERS_2) umfasst, die jeweils zum Aufbauen einer Hilfskommunikationsverbindung (105, 106, 107, 108) mit einem Repeater (REP) auf einer an Land oder auf See platzierten separaten Relaisstation (REL) oder mit einer separaten entfernten Endstation (ST_1, ST_2) konfiguriert sind, wobei die Station SHA ferner ein Steuerelement (ORG) umfasst, das zum selektiven Aktivieren einer Hauptkommunikationsverbindung oder einer Hilfskommunikationsverbindung in Abhängigkeit von einem Indikator des Betriebszustands der Hauptkommunikationsverbindung konfiguriert ist.

2. Station auf einer stationären Plattform in großer Höhe nach Anspruch 1, wobei das Steuerelement (ORG) ein Gerät zum Messen eines Indikators des Betriebszustands der Hauptkommunikationsverbindung umfasst und die Station SHA ein Auswahlgerät (SEL_1, SEL_2) umfasst, das zum Aktivieren einer Hilfskommunikationsverbindung konfiguriert ist, wenn der Betriebszustand einer Hauptkommunikationsverbindung verschlechtert ist.

3. Station auf einer stationären Plattform in großer Höhe nach Anspruch 1, wobei der Indikator des Betriebszustands der Hauptkommunikationsverbindung von den meteorologischen Bedingungen abhängt.

4. Station auf einer stationären Plattform in großer Höhe nach einem der vorherigen Ansprüche, wobei die Hauptkommunikationsverbindung (101, 102, 103) eine optische Verbindung ist.

5. Station auf einer stationären Plattform in großer Höhe nach einem der vorherigen Ansprüche, in der die Hilfskommunikationsverbindung (105, 106, 107, 108) eine Funkfrequenzverbindung ist.

6. Station auf einer stationären Plattform in großer Höhe nach einem der vorherigen Ansprüche, die mindestens eine Sende-/Empfangseinheit (ERA, ERN) umfasst, die zum Aufbauen einer dritten Kommunikationsverbindung (300, 301) mit einem Flugzeug (TU_1) oder einem Schiff (TU_2) konfiguriert ist.

7. System für die Telekommunikation zwischen einer ersten entfernten Endstation (ST_1) und einer zweiten entfernten Endstation (ST_2), das mindestens zwei Stationen (SHA_1, SHA_2) auf stationären Hochplattformen in großer Höhe nach einem der vorherigen Ansprüche umfasst, wobei das System ferner mindestens einen Repeater (REP) umfasst, der auf einer Relaisstation (REL) am Boden oder auf See platziert und zum Weiterleiten der Kommunikationen zwischen zwei Stationen (SHA_1, SHA_2) auf stationären Plattformen in großer Höhe konfiguriert ist.

8. Telekommunikationssystem nach Anspruch 7, bei dem der Abstand zwischen zwei stationären Plattformen in großer Höhe aus zwei jeweils vorbestimmten Höhenwinkeln zwischen der Relaisstation (REL) und den beiden jeweiligen Plattformen bestimmt wird, wobei die Höhenwinkel in Abhängigkeit von der geographischen Umgebung des Repeaters vorbestimmt sind.

## Claims

1. Station, SHA, placed on a high-altitude stationary platform, the station SHA comprising two main emitter/receiver sets (ERP_1, ERP_2), each configured to establish a main communication link (101, 102, 103) with a distinct remote terminal station (ST_1, ST_2) or with another station placed on a distinct high-altitude stationary platform (SHA_1, SHA_2) and two backup emitter/receiver sets (ERS_1, ERS_2), each configured to establish a backup communication link (105, 106, 107, 108) with a repeater (REP) placed on a distinct relay station (REL) on the ground or at sea or with a distinct remote terminal station (ST_1, ST_2), the station SHA furthermore comprising a control facility (ORG) configured to selectively activate a main communication link or a backup communication link as a function of an indicator of the operating state of the main communication link.

2. Station placed on a high-altitude stationary platform according to claim 1, wherein the control facility (ORG) comprises a device for measuring an indicator of the operating state of the main communication link and the station SHA comprises a selection device (SEL_1, SEL_2) configured to activate a backup communication link when the operating state of a main communication link is degraded.

3. Station placed on a high-altitude stationary platform according to claim 1, wherein the indicator of the operating state of the main communication link depends on the meteorological conditions.

4. Station placed on a high-altitude stationary platform according to one of the preceding claims, wherein the main communication link (101, 102, 103) is an optical link.

5. Station placed on a high-altitude stationary platform according to one of the preceding claims, wherein the backup communication link (105, 106, 107, 108) is a radiofrequency link.

6. Station placed on a high-altitude stationary platform according to one of the preceding claims, comprising at least one emitter/receiver set (ERA, ERN) configured to establish a third communication link (300, 301) with an aircraft (TU_1) or a ship (TU_2).

7. System for telecommunications between a mutually remote first terminal station (ST_1) and second terminal station (ST_2), comprising at least two stations (SHA_1, SHA_2) according to one of the preceding claims placed on high-altitude stationary platforms, the system further comprising at least one repeater (REP) placed on a relay station (REL) on the ground or at sea and configured to relay the communications between two stations (SHA_1, SHA_2) placed on high-altitude stationary platforms.

8. Telecommunications system according to claim 7, wherein the distance between two high-altitude stationary platforms is determined on the basis of two predetermined respective angles of elevation between the relay station (REL) and the two respective platforms, the angles of elevation being predetermined as a function of the geographical environment of the repeater.
